# EUROPÄISCHE PATENTSCHRIFT

(11) **EP 2 698 979 B1**
(45) Veröffentlichungstag und Bekanntmachung des Hinweises auf die Patenterteilung: **03.05.2017**
(21) Anmeldenummer: 12180666.5
(22) Anmeldetag: 16.08.2012
(51) Int. Cl.: H04N 5/00

(54) **Vorrichtung und Verfahren zum Präsentieren von Objekten**
Method and device for presenting objects
Dispositif et procédé de présentation d'objets

(43) Veröffentlichungstag der Anmeldung: 19.02.2014
(73) Patentinhaber: Wincor Nixdorf International GmbH, 33106 Paderborn (DE)
(72) Erfinder: Schäfer, Oliver, 10369 Berlin (DE); Jokhovets, Lioubov, 98693 Ilmenau (DE)
(74) Vertreter: Maikowski & Ninnemann Patentanwälte Partnerschaft mbB

(56) Entgegenhaltungen:
- EP-A1- 2 214 139
- EP-A2- 0 471 196
- WO-A1-2005/073895
- WO-A1-2006/045285
- DE-A1-102010 037 448
- US-A1- 2009 167 923
- US-A1- 2010 309 362

## Beschreibung

Die Erfindung betrifft eine Vorrichtung zum Präsentieren von Objekten nach dem Oberbegriff des Anspruchs 1 und ein Verfahren zum Präsentieren von Objekten.

Eine derartige Vorrichtung weist eine Ablagefläche zum Ablegen mindestens eines Objekts, eine Kameravorrichtung zum Aufnehmen mindestens eines Bildes zum Abbilden mindestens eines auf der Ablagefläche abgelegten Objekts, ein Kameraobjektiv der Kameravorrichtung und eine Autofokuseinheit der Kameravorrichtung zum Einstellen der Bildschärfe des mindestens einen Bildes auf. Die Autofokuseinheit ist hierbei ausgebildet, eine Fokusstellung des Kameraobjektivs in Abhängigkeit von einem Steuerparameter einzustellen.

Derartige Vorrichtungen zum Präsentieren von Objekten können beispielsweise in Ladengeschäften zum Einsatz kommen, bei denen in automatischer Weise Waren an einer Bezahlstation erfasst und eingelesen werden sollen (so genannte automatische Checkout-Systeme). Bei solchen Systemen legen Kunden beispielsweise Waren, die sie kaufen wollen, auf ein Förderband, das die Waren automatisch durch ein Checkout-Portal führt, das die Waren erfasst, indem es beispielsweise einen auf einem Produkt angebrachten Barcode einliest. Solche Systeme arbeiten im Wesentlichen automatisch, ohne dass eine Interaktion durch einen Verkäufer erforderlich ist, wodurch Zeit bei Checkout-Vorgängen gespart und zudem Personal eingespart werden kann.

Bei solchen automatischen Checkout-Systemen ist erforderlich, dass auf eine Ablagefläche gelegte Objekte in richtiger Weise erkannt werden können, so dass Barcodes oder andere Erkennungsmarken eingelesen werden können, um die Waren zu registrieren und entsprechend abzurechnen. Das Erkennen und Registrieren von Waren kann hierbei jedoch schwierig sein, weil Waren in unterschiedlicher Position und Orientierung auf die Ablagefläche gelegt werden können und sich somit Skalierungseffekte und perspektivische Verzerrungen an einer Erfassungseinrichtung ergeben.

Zudem ist bei solchen Systemen grundsätzlich erforderlich, dass Waren einzeln auf eine Ablagefläche wie z. B. ein Förderband gelegt werden, so dass die Waren in zuverlässiger Weise erkannt werden können. Ein teilweises oder vollständiges Überdecken von Objekten mit anderen Objekten, beispielsweise durch Übereinanderschichten von Objekten, ist regelmäßig nicht zulässig, weil in einem solchen Fall ein unter einem anderen Objekt liegendes Objekt nicht erkannt und somit auch nicht registriert werden kann.

Solche Systeme sehen daher regelmäßig eine Plausibilitätsprüfung vor, zu der beispielsweise eine an der Ablagefläche angeordnete Waage eingesetzt wird, die das Gewicht eines Objekts erfasst und mit erwarteten Gewichtsdaten vergleicht. Im Falle einer Abweichung wird gegebenenfalls eine Ungültigkeit aufgrund eines unzulässigen Platzierens von Objekten auf der Ablagefläche angezeigt, so dass der Platzierungsvorgang wiederholt oder gegebenenfalls die Waren händisch durch Personal registriert werden können.

Es besteht ein Bedürfnis nach einer Weiterentwicklung solcher Vorrichtungen, die in einfacher und kostengünstiger Weise möglichst unter Verwendung bereits vorhandener Mittel eine Plausibilitätsprüfung von auf eine Ablagefläche abgelegten Objekten ermöglicht.

Bei einer aus der DE 10 2007 036 795 A1 bekannten Vorrichtung wird ein Objekt punktuell oder scannend gemessen unter Verwendung eines Abstandssensors und eines Bildverarbeitungssensors, um auf diese Weise ein Objekt zu erfassen. Der Abstandssensor liefert hierbei Messdaten, und der Bildverarbeitungssensor erfasst einen Messfleck des Abstandssensors auf dem Objekt bei dessen Messvorgang, analysiert den Messfleck und verwirft bei nicht erwarteten Abbildungen des Messflecks die Messung.

Aus der EP 0 214 120 B1 ist ein Verfahren zum Erfassen der Position und Geometrie von Werkstückoberflächen, insbesondere von Nahtfugen beim automatischen Lichtbogenschweißen, bekannt. Dabei werden zwei Bildaufnehmer verwendet, die gegeneinander verschobene Bilder des gleichen Ausschnitts einer Werkstückoberfläche abbilden, um aus Position und Abstand der markanten Stellen der beiden Bilder der Werkstückoberfläche die Geometrie der Werkstückoberfläche sowie deren Position relativ zum betrachtenden System zu ermitteln.

Aus der EP 1 662 276 B1 und der EP 1 674 892 B1 sind variable Fokuslinsen zur Einstellung einer Fokusstellung einer Autofokuseinheit bekannt.

Die US 2010/309362 A1 betrifft eine Kameraeinrichtung mit einer Autofokuseinheit, die unter Einbeziehung einer Positionsinformation einer Fokussierlinsengruppe die Erstellung eines Tiefenbilds ermöglicht. Als Anwendungsbeispiel ist eine Aufnahme einer tischartigen Ablagefläche mit darauf angeordneten Flaschen und Dosen offenbart, von denen ein Tiefenbild erzeugt wird.

Aufgabe der vorliegenden Erfindung ist es, eine Vorrichtung zum Präsentieren von Objekten der eingangs genannten Art sowie ein Verfahren zum Präsentieren von Objekten zur Verfügung zu stellen, die auf einfache, kostengünstige und möglichst unter Verwendung von bei einem Erfassungssystem ohnehin vorhandener Mittel z.B. eine Plausibilitätsprüfung für auf einer Ablagefläche abgelegte Objekte ermöglichen.

Diese Aufgabe wird durch einen Gegenstand mit den Merkmalen des Anspruchs 1 gelöst.

Demnach ist eine Steuer- und Auswerteeinheit vorgesehen, die ausgebildet ist, anhand eines einer eingestellten Fokusstellung zugeordneten Steuerparameterwerts einen Abstandswert, der einen Abstand zwischen einer Region des mindestens einen Objekts und dem Kameraobjektiv angibt, zu bestimmen.

Die vorliegende Erfindung geht von dem Gedanken aus, eine Abstandsmessung zu einem Objekt unter Verwendung einer Autofokuseinheit einer Kameravorrichtung vorzunehmen. Diesem liegt der Gedanke zugrunde, dass mittels der Autofokuseinheit die Bildschärfe eines Bildes auf eine Fokusebene eingestellt wird, wobei diese Einstellung unter Verwendung eines Steuerparameters erfolgt, der mit dem Abstand zwischen einer betrachteten Region des Objekts (auf die die Fokusebene eingestellt wird) und der Kameravorrichtung korreliert. Aus dem aktuellen Wert des Steuerparameters kann somit ein Abstandswert abgeleitet werden, der zumindest näherungsweise den Abstand zwischen der Region des Objekts und dem Kameraobjektiv angibt. Wird die

Fokusstellung durch Änderung des Steuerparameterwerts zum Scharfstellen auf eine andere Region eines Objekts verstellt, so ändert sich auch der zugeordnete Abstandswert, was entsprechend ausgewertet werden kann.

Mittels der vorgeschlagenen Vorrichtung soll eine Abstandsmessung zwischen einer Kameravorrichtung und einem oder mehreren Objekten mittels einer Autofokuseinheit vorgenommen werden, die bei üblichen Kameravorrichtungen ohnehin vorhanden ist. Zur Abstandsmessung werden somit Mittel verwendet, die standardmäßig zur Verfügung stehen, wenn eine Kameravorrichtung zum Erfassen eines Objekts beispielsweise im Rahmen eines automatischen Checkout-Systems zum Einsatz kommt. Es kann somit auf zusätzliche Mittel wie Waagen oder dergleichen verzichtet werden, so dass sich der Bauraumbedarf und die Kosten solcher Systeme reduzieren.

Die Ablagefläche kann beispielsweise als Förderband, als Ablageplattform oder einsehbares Behältnis ausgestaltet sein, mittels dessen ein oder mehrere Objekte an der Kameravorrichtung vorbeigeführt bzw. in dessen Sichtbereich platziert werden, um von der Kameravorrichtung erfasst zu werden.

Die Abstandsmessung mittels der Autofokuseinheit eröffnet vielfältige Möglichkeiten beispielsweise hinsichtlich einer Plausibilitätsprüfung von auf der Ablagefläche abgelegten Objekten, hinsichtlich einer Bildkorrektur beim Erfassen der Objekte zum Registrieren beispielsweise für einen Bezahlvorgang oder hinsichtlich der Formenerkennung von Objekten.

Beispielsweise kann die Steuer- und Auswerteeinheit ausgebildet sein, anhand mehrerer Steuerparameterwerte, die mehreren unterschiedlichen Fokusstellungen zugeordnet sind, mehrere Abstandswerte zu bestimmen, wobei jeder Abstandswert zumindest näherungsweise einen Abstand zwischen einer bestimmten Region des mindestens einen Objekts und dem Kameraobjektiv angibt. Durch Bestimmung von unterschiedlichen Abstandswerten entlang einer oder entlang mehreren Linien oder entlang eines zweidimensionalen Rasters kann auf diese Weise ein eindimensionales oder zweidimensionales Höhenprofil des mindestens einen Objekts bestimmt werden, das die Höhenverteilung des Objekts entlang einer Linie oder entlang eines Rasters angibt. Das Höhenprofil ergibt sich hierbei direkt aus den bestimmten Abstandswerten, wobei ein relatives Höhenprofil, das die Änderung der Höhe angibt, oder ein absolutes Höhenprofil, das die absolute Höhe des Objekts angibt, unter Berücksichtigung eines vorab bekannten Abstands zu der (leeren) Ablagefläche bestimmt werden kann.

Grundsätzlich kann der Abstandswert in relativer oder absoluter Weise bestimmt werden. So kann zur Bestimmung eines relativen Abstandswerts die Änderung des Abstands zwischen unterschieidlichen Regionen eines Objekts bestimmt werden. Soll der absolute Abstand zwischen der Kameravorrichtung und einer Region eines Objektes angegeben werden, so ist zusätzlich der vorab bekannte Abstand zu der (leeren) Ablagefläche zu berücksichtigen, wobei sich aus der Differenz des gemessenen Abstandswerts und des vorab bekannten Abstandswerts für die (leere) Ablagefläche die Höhe des auf der Ablagefläche befindlichen Objekts ergibt.

Unter einer Region eines Objekts ist im Rahmen des vorliegenden Textes ein Ausschnitt des Objekts zu verstehen, auf den die Autofokuseinheit das Bild scharf stellt. Hierzu kann, in an sich bekannter Weise, die Autofokuseinheit in einem Bildausschnitt, der eine Region des Objekts abbildet, den Kontrast und/oder den Anteil hoher Frequenzen bestimmen, wobei durch Variation der Fokusstellung der Kontrast und/oder der Anteil der hohen Frequenzen in dem Bildausschnitt maximiert werden. Das Bild ist dann mit Bezug auf die dem Bildausschnitt zugeordnete Region scharf gestellt, wenn der Kontrast und/oder der Anteil der hohen Frequenzen im Bild maximal sind.

Eine Autofokuseinheit einer Kameravorrichtung kann hierbei mehrere Autofokussensoren aufweisen, mittels denen eine Scharfstellung des Bildes in unterschiedlichen Regionen möglich ist. Um beispielsweise mehrere Abstandswerte, die Abstände zu unterschiedlichen Regionen des Objekts angeben, zu bestimmen, kann sukzessive unter Verwendung mehrerer Autofokussensoren auf unterschiedliche Regionen scharf gestellt werden, um dann anhand der sich jeweils ergebenden Steuerparameterwerte die Abstandswerte abzuleiten und daraus gegebenenfalls ein Höhenprofil zu erstellen.

Beispielsweise kann anhand des bestimmten Höhenprofils des mindestens einen Objekts eine Abweichung von einem erwarteten Höhenprofil des mindestens einen Objekts ermittelt werden. Diesem liegt der Gedanke zugrunde, dass mittels einer Erfassungseinrichtung beispielsweise im Rahmen eines automatischen Checkout-Systems ein Barcode einer Ware eingelesen wird und anhand des Barcodes die Ware identifiziert wird. In einer Datenbank können hierbei zu der identifizierten Ware Daten bezüglich Form und Größe hinterlegt sein, so dass das gemessene Höhenprofil mit den hinterlegten Geometriedaten verglichen werden kann, um anhand des Vergleichs zu ermitteln, ob die Ware richtig auf die Ablagefläche aufgelegt worden ist oder nicht. Bestehen Abweichungen zwischen dem gemessenen Höhenprofil und den vorab hinterlegten Geometriedaten, aus denen sich ein erwartetes Höhenprofil ergibt, so kann hieraus geschlossen werden, dass eine Unstimmigkeit vorliegt, beispielsweise bedingt dadurch, dass die Ware auf ein anderes Objekt gelegt worden ist oder zumindest teilweise von einem anderen Objekt überdeckt ist.

Generell lässt sich eine Plausibilitätsprüfung bereits anhand eines einzigen bestimmten Abstandswertes durchführen, wobei die Plausibilitätsprüfung aber genauere Ergebnisse liefert, wenn mehrere Abstandswerte berücksichtigt werden. Grundsätzlich wird hierbei ein bestimmter Abstandswert mit einem vorbekannten, erwarteten Abstand verglichen, um in Abhängigkeit von dem Vergleich zu prüfen, ob das mindestens eine Objekt richtig auf die Ablagefläche aufgelegt worden ist oder nicht.

Die Bestimmung der Abstandswerte kann auch dazu verwendet werden, eine Neigung des mindestens einen Objekts relativ zu der Ablagefläche zu bestimmen. Hierzu werden vorzugsweise mindestens drei Abstandswerte ermittelt, die die Abstände zu mindestens drei unterschiedlichen Regionen des mindestens einen Objekts angeben. Die den Regionen zugeordneten Bildausschnitte, auf die fokussiert wird, sind hierbei vorteilhafterweise hinreichend weit voneinander entfernt, so dass aus den drei Abstandswerten gegebenenfalls unter Berücksichtigung einer vorab bekannten Form des Objekts die Neigungslage des Objekts bestimmt werden kann. Ergibt sich, dass das Objekt in unvorhergesehener Weise geneigt ist, so kann dies darauf hindeuten, dass sich unter dem Objekt ein anderes Objekt befindet, was im Rahmen einer Plausibilitätsprüfung entsprechend angezeigt werden kann.

Die Steuer- und Auswerteeinheit kann auch ausgebildet sein, anhand mehrerer bestimmter Abstandswerte die Form eines Objekts zu erkennen, indem in gerasteter Weise ein vollständiges Profil des Objekts ermittelt und daraus mittels Kanten- und Formenerkennung auf die dreidimensionale Formgebung des Objektes zurückgeschlossen wird.

Zudem kann anhand eines oder mehrerer bestimmter Abstandswerte ein Korrekturfaktor für eine Bildverarbeitung bestimmt werden, um anhand des Korrekturfaktors eine Skalierung des in dem aufgenommenen Bild abgebildeten Objekts zu verändern und/oder eine perspektivische Verzerrung des in dem aufgenommenen Bild abgebildeten Objekts auszugleichen. Diesem liegt die Erkenntnis zugrunde, dass sich in Abhängigkeit von der Position und Orientierung eines Objekts auf der Ablagefläche Skalierungseffekte sowie perspektivische Verzerrungseffekte ergeben können. So kann in Abhängigkeit von dem ermittelten absoluten Abstand eine Skalierung der Objektgröße vorgenommen werden. Und anhand einer ermittelten Neigung können perspektivische Verzerrungen erkannt und gegebenenfalls in einer nachfolgenden Bildverarbeitung herausgerechnet werden.

Vorteilhafterweise umfasst das Kameraobjektiv eine Linse, wobei mittels der Autofokuseinheit eine Fokusstellung der Linse einstellbar ist. So kann zur Einstellung der Fokus die Linse beispielsweise mechanisch verstellt werden, oder bei Ausgestaltung der Linse z. B. als Flüssigkeitslinse kann die Linsenform verändert werden, so dass auf diese Weise die Fokusstellung variiert werden kann.

Solche Flüssigkeitslinsen, auch als variable Fokuslinsen bezeichnet, sind beispielsweise in der EP 1 662 276 B1 und EP 1 674 892 B1 beschrieben, deren Inhalt vorliegend mit einbezogen werden soll.

Die Aufgabe wird auch durch ein Verfahren zum Präsentieren eines Objekts gelöst, bei dem
- mindestens ein Objekt auf eine Ablagefläche abgelegt wird,
- eine Kameravorrichtung mindestens ein Bild zum Abbilden des auf der Ablagefläche abgelegten Objektes aufnimmt und
- eine Autofokuseinheit einer Kameravorrichtung die Bildschärfe des mindestens einen Bildes einstellt, indem die Autofokuseinheit eine Fokusstellung des Kameraobjektivs in Abhängigkeit von einem Steuerparameter einstellt.

Dabei ist vorgesehen, dass eine Steuer- und Auswerteeinheit anhand eines einer eingestellten Fokusstellung zugeordneten Steuerparameters ein Abstandswert, der einen Abstand zwischen einer Region des mindestens einen Objekts und dem Kameraobjektiv angibt, bestimmt.

Zu Vorteilen und vorteilhaften Ausgestaltungen des Verfahrens soll auf das vorangehend zu der Vorrichtung zum Präsentieren von Objekten Ausgeführte verwiesen werden, das analog auch auf das Verfahren Anwendung findet.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht einer Vorrichtung zum Präsentieren von Objekten;
- Fig. 2A: eine grafische Ansicht des Abstands zwischen einem Kameraobjektiv und einer scharf abgebildeten Objektebene in Abhängigkeit von einem Steuerparameter;
- Fig. 2B: eine grafische Ansicht einer Kontrast-/Gradientenfunktion in Abhängigkeit vom Steuerparameter;
- Fig. 3A: eine schematische Ansicht der Bestimmung von einer Kontrast Gradientenfunktion in Abhängigkeit von einem Steuerparameter in unterschiedlichen in einem Bild abgebildeten Regionen eines Objekts;
- Fig. 3B: eine grafische Ansicht des Abstands in Abhängigkeit vom Steuerparameter;
- Fig. 3C: eine grafische Ansicht der für die unterschiedlichen Regionen abgeleiteten Abstandswerte;
- Fig. 3D: eine grafische Ansicht eines bestimmten Höhenprofils;
- Fig. 3E: eine schematische Ansicht eines Objekts auf einer Ablagefläche;
- Fig. 4A: eine grafische Ansicht eines bestimmten Höhenprofils für ein Objekt, das zumindest teilweise von einem anderen Objekt überlagert ist;
- Fig. 4B: eine schematische Ansicht eines Objekts auf einer Ablagefläche, das von einem anderen Objekt überlagert ist;
- Fig. 5A: eine grafische Ansicht eines Höhenprofils für ein Objekt, unter dem noch andere Objekte angeordnet sind;
- Fig. 5B: eine schematische Ansicht von mehreren übereinander gestapelten Objekten;
- Fig. 6A: eine grafische Ansicht eines Höhenprofils für ein geneigtes Objekt;
- Fig. 6B: eine schematische Ansicht eines auf anderen Objekten angeordneten, geneigten Objekts; und
- Fig. 7: eine schematische Ansicht von abgebildeten Regionen eines Objekts, anhand derer Abstandswerte zur Bestimmung einer Neigung eines Objekts bestimmt werden.

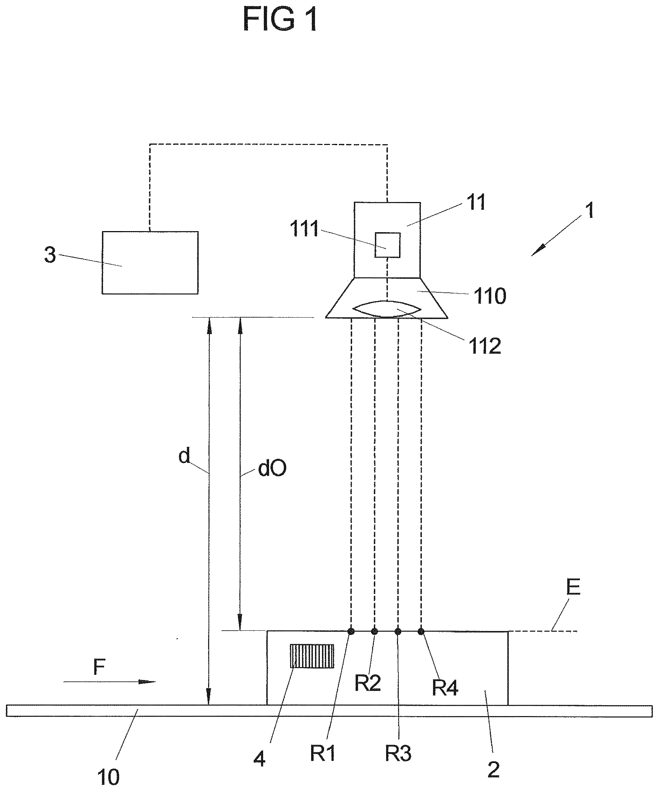

Fig. 1 zeigt in einer schematischen Ansicht eine Vorrichtung 1 zum Präsentieren von Objekten 2, die eine Ablagefläche 10 in Form eines Förderbandes, einer Ablageplattform oder eines einsehbaren Behältnisses aufweist, auf den Objekte 2 in eine Förderrichtung F an einer Kameravorrichtung 11 vorbei gefördert bzw. in dessen Sichtbereich platziert werden können.

Die Vorrichtung 1 kann beispielsweise Bestandteil eines automatischen Checkout-Systems sein, bei dem Ware auf die Ablagefläche 10 gelegt und an einer Erfassungseinrichtung vorbeigeführt werden, mittels derer eine Erkennungsmarke 4 beispielsweise in Form eines Barcodes auf einem Objekt 2 eingelesen wird, um durch Einlesen der Erkennungsmarke 4 das Objekt 2 zu erkennen und zu registrieren und zur Bezahlung durch einen Kunden abzurechnen. Der für das Objekt 2 zu bezahlende Betrag wird entsprechend einer Rechnung hinzugefügt, die dann durch den Kunden auszugleichen ist.

Die Erfassungsvorrichtung kann beispielsweise durch die Kameravorrichtung 11 und eine damit verbundene Steuer- und Auswerteeinheit 3 gebildet sein, die zum Einlesen von unterschiedlichen Erkennungsmarken 4 ausgestaltet sein kann. Im Betrieb der Vorrichtung werden Objekte an der Erfassungseinrichtung vorbeigeführt, die Erkennungsmarken 4 der Objekte 2 werden eingelesen und einem Kunden gegenüber entsprechend abgerechnet.

Mittels solcher Systeme ist ein automatisches Bezahlen beispielsweise in der Umgebung eines Ladengeschäfts möglich, ohne dass händisch durch Personal Waren gescannt werden müssen.

Bei solchen automatischen Checkout-Systemen besteht das Problem, dass ein automatischer Einlesevorgang in der Regel nur dann gewährleistet werden kann, wenn die Objekte 2 in ordnungsgemäßer Weise einzeln auf der Ablagefläche 10 angeordnet sind, so dass insbesondere Erkennungsmarken 4 durch die Kameravorrichtung 10 erfassbar sind. Ein Stapeln und Überlagern von Objekten 2 ist nur bedingt zulässig. Insbesondere ist zu vermeiden, dass ein Objekt 2 durch ein anderes Objekt 2 unerwartet überdeckt und - beabsichtigt oder unbeabsichtigt - versteckt ist und dadurch fälschlicherweise nicht registriert werden kann.

Eine vom System erwartete und somit zulässige Überdeckung der Objekte 2, beispielsweise beim Platzieren auf einer Ablageplattform oder in einem Behältnis, kann sich z.B. durch ein vom System vorgeschriebenes und geführtes sequentielles und somit nachvollziehbares Stapeln der Objekte 2 ergeben.

Die vorliegende Vorrichtung 1 verwendet eine Abstandsmessung mittels einer Autofokuseinheit 111 der Kameravorrichtung 11, mittels derer ein Abstand d zu einem Objekt 2 bzw. zu einzelnen Regionen R1-R4 des Objekts 2 bestimmt werden kann. Eine solche Abstandsmessung ermöglicht, neben weiteren vorteilhaften Verwendungsmöglichkeiten, eine Plausibilitätsprüfung, anhand derer bestimmt werden kann, ob Objekte 2 in zulässiger Weise auf die Ablagefläche 10 aufgelegt worden sind oder nicht.

Die Abstandsmessung erfolgt hierbei dadurch, dass aus einer Fokusstellung der Autofokuseinheit 111, mittels derer ein durch die Kameravorrichtung 11 über das Kameraobjektiv 110 aufgenommenes Bild in einer Fokusebene E scharf gestellt ist, eine Information über den Abstand zwischen dem Kameraobjektiv 110 und der scharf gestellten Fokusebene E abgeleitet werden kann. Anhand einzelner Bildausschnitte eines Bildes oder mittels gesonderter Fokussensoren stellt die Fokuseinheit 111 hierbei das Bild anhand der Abbildung von Regionen R1-R4 scharf, so dass aus dem Abstand d zur Fokusebene E auch die geometrische Information über den Abstand d zu der Region R1-R4, auf die die Fokusebene E scharf gestellt worden ist, abgeleitet werden kann.

Werden anhand unterschiedlicher Fokusstellungen Abstandswerte zu unterschiedlichen Regionen R1-R4 bestimmt, so lässt sich hieraus ein Höhenprofil erstellen, anhand dessen geometrische Informationen über die Form und Lage eines Objekts 2 erhalten werden können.

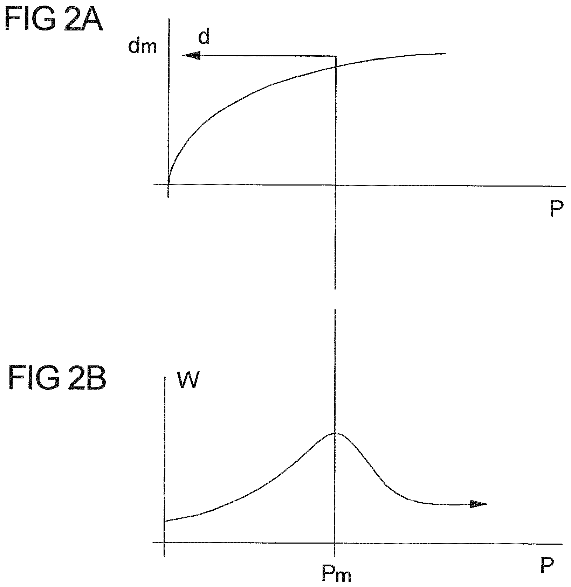

Fig. 2A und 2B zeigen grafisch den Zusammenhang zwischen einem Abstandswert dm und einem Steuerparameter P für eine Fokusstellung der Autofokuseinheit 111 (Fig. 2A) und eine den Kontrast und/oder Gradienten in einer abgebildeten Region R1-R4 angebende Funktion W, aufgetragen über den Steuerparameter P (Fig. 2B). Anhand des Steuerparameters P wird die Fokusstellung der Autofokuseinheit 111, die auf eine Linse 112 zum Einstellen der Fokusebene E einwirkt, eingestellt. Die Fokusstellung wird hierbei so eingestellt, dass die Funktion W maximal ist, entsprechend einem maximalen Kontrast und/oder einem maximalen Anteil hoher Frequenzen in dem der Region R1-R4 entsprechenden Bildausschnitt eines aufgenommenen Bildes. Es ergibt sich anhand des Maximalwerts der Funktion W ein Steuerparameterwert Pm, anhand dessen, wie die Grafik gemäß Fig. 2A zeigt, ein Abstandswert dm bestimmt werden kann, der zumindest näherungsweise den Abstand d zu der in dem entsprechenden Bildausschnitt abgebildeten Region R1-R4 angibt.

Anhand des ermittelten Abstandswertes dm für ein Objekt 2 kann die absolute Höhe des Objekts 2 bestimmt werden, wenn der Abstand d0 zu der Ablagefläche 10 vorbekannt ist. In diesem Fall kann durch Subtraktion des ermittelten Abstands d von dem vorbekannten Abstand d0 zu der Auflagefläche 10 die Höhe des Objekts 2 bestimmt werden.

Der Abstand d0 zu der Ablagefläche 10 kann beispielsweise dadurch bestimmt werden, dass vorab die Fokusstellung ermittelt wird, mit der das durch die Kameravorrichtung 11 aufgenommene Bild auf die der Ablagefläche 10 entsprechende Fokusebene E scharf gestellt ist. Dies kann bei einer Ablagefläche 10, die eine homogene Oberflächenbeschaffenheit und -farbgebung aufweist, dadurch erfolgen, dass auf die Fokusebene E scharf gestellt wird, in der sich in einem abgebildeten Bild ein maximales Hintergrundrauschen ergibt. Weist die Ablagefläche 10 eine Textur auf, wird hingegen vorteilhafterweise auf die Fokusebene E scharf gestellt werden, in der sich ein maximaler Kontrast und/oder Gradient in einem oder in mehreren Bildausschnitten, die unterschiedlichen Regionen entsprechen, ergibt.

Analog kann zwischen einem weiteren Objekt 2, das auf dem vorherigen Objekt 2 platziert wird, auch dessen Abstand d zur Kameravorrichtung 11 und somit durch Subtraktion der Höhe des vorherigen Objektes 2 (äquivalent zur Berechnung zwischen Auflagefläche 10 und der Höhe des Objekts 2) dessen absolute Höhe ermittelt werden.

Kommt es zu einer vom System erwarteten und somit zulässigen Überdeckung der Objekte 2, beispielsweise beim Platzieren auf einer Ablageplattform oder in einem Behältnis, z.B. durch ein vom System vorgeschriebenes und geführtes sequentielles und somit nachvollziehbares Stapeln der Objekte 2, so kann für jedes einzelne Objekt 2 die neue relative Höhe ermittelt werden. Die absolute Gesamthöhe des Objektstapels entspricht dann den akkumulierten relativen Höhen der einzelnen Objekte 2.

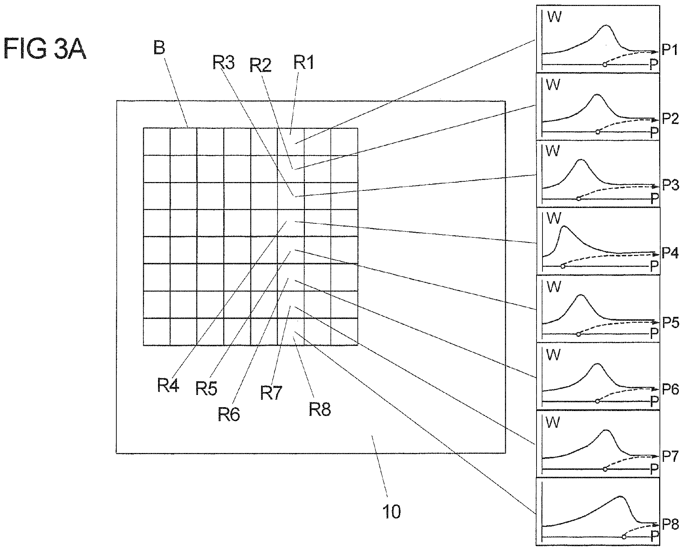

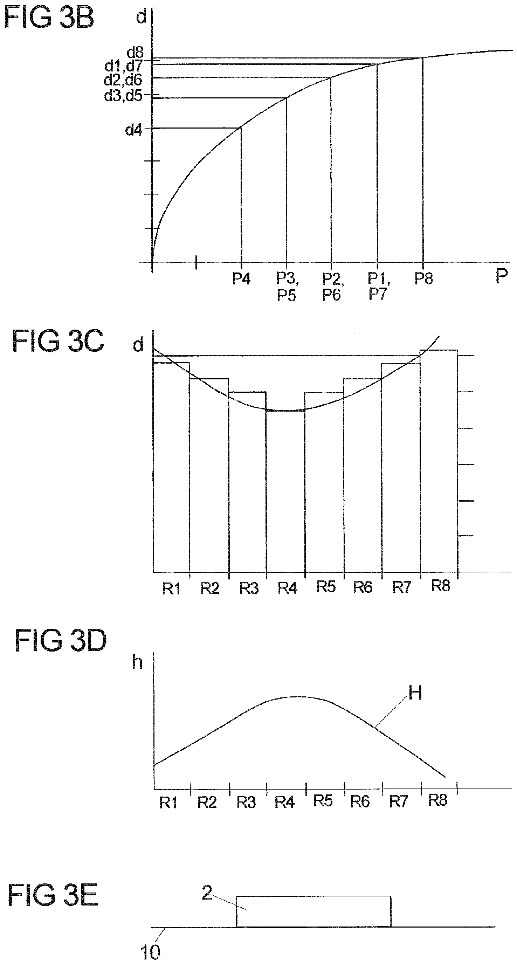

Fig. 3A-3D zeigen schematisch, wie mittels der Autofokuseinheit 111 ein Höhenprofil H eines Objekts 2 erstellt werden kann. Hierzu wird mittels der Autofokuseinheit 111 für unterschiedlichen Regionen R1-R8 entsprechende Bildausschnitte eines Bildes B jeweils ein Steuerparameterwert P1-P8 bestimmt, der die Fokusstellung zum Scharfstellen auf die jeweilige Region R1-R8 angibt. Ist der Steuerparameterwert P1-P8 für die den unterschiedlichen Regionen R1-R8 entsprechenden Bildausschnitte anhand des Maximums der jeweils zugeordneten Funktionen W bestimmt worden, so kann anhand des Steuerparameterwerts P1-P8 jeweils ein Abstandswert d1-d8 ermittelt werden (Fig. 3B), anhand dessen für jede Region R1-R8 ein Abstand d angegeben werden kann (Fig. 3C). Durch Subtraktion des vorab bekannten Abstands d0 zur Ablagefläche 10 kann dann das Höhenprofil H über die einzelnen Regionen R1-R8 bestimmt werden, wie dies in Fig. 3D darstellend die Höhe h über die Region R1-R8 gezeigt ist.

Der dem Ausführungsbeispiel gemäß Fig. 3A-3D entsprechende Fall ist schematisch in Fig. 3E dargestellt: Auf der Ablagefläche 10 befindet sich ein Objekt 2, dessen Höhenprofil H in eindimensionaler Richtung entlang einer Linie, wie in Fig. 3A dargestellt, bestimmt worden ist.

Durch vollständige Rasterung in zwei Raumrichtungen entsprechend den Zeilen und Spalten des gerasterten Bildes B gemäß Fig. 3A kann ein vollständiges Höhenprofil H des Objekts 2 entlang eines zweidimensionalen Rasters bestimmt werden, anhand dessen die Objektform, die Lage und Position des Objekts eindeutig bestimmt werden kann.

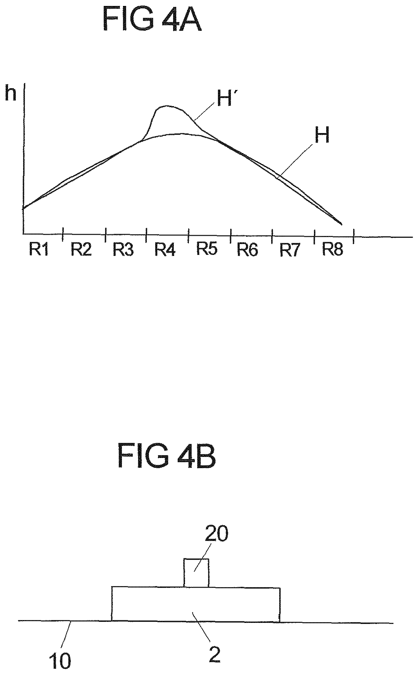

Durch Bestimmung des Höhenprofils H kann eine Plausibilitätsprüfung durchgeführt werden. So kann, wie in Fig. 4A und 4B dargestellt ist, anhand eines ermittelten Höhenprofils H' bestimmt werden, ob ein Objekt 20 ein anderes Objekt 2 überlagert, indem das bestimmte Höhenprofil H' mit einem vorab bekannten, erwarteten Höhenprofil H des Objekts 2 verglichen wird. Beispielsweise kann durch Einlesen einer Erkennungsmarke 4 bekannt sein, welches Objekt 2 sich auf der Ablagefläche 10 befindet. Für dieses Objekt 2 können in einer Datenbank geometrische Daten hinterlegt sein, aus denen sich ein erwartetes Höhenprofil H ergibt. Stimmt dieses erwartete Höhenprofil H mit dem gemessenen, bestimmten Höhenprofil H' überein, so ist das Objekt 2 in zulässiger Weise auf die Ablagefläche 10 gelegt worden. Bestehen signifikante Abweichungen zwischen dem bestimmten Höhenprofil H' und dem erwarteten Höhenprofil H, wie dies in Fig. 4A veranschaulicht ist, so deutet dies auf ein unzulässiges Auflegen des Objektes 2 auf die Ablagefläche 10, beispielsweise aufgrund eines zumindest teilweisen Überdeckens durch ein anderes Objekt 20, hin.

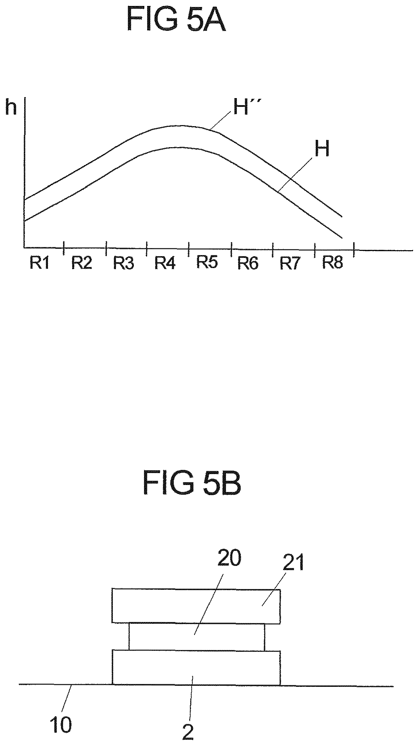

Ein anderer Fall ist in Fig. 5A und 5B veranschaulicht. Sind beispielsweise mehrere Objekte 2, 20, 21 aufeinander gestapelt und wird ein Höhenprofil H" bestimmt, das in seiner Form zwar dem erwarteten Höhenprofil H entspricht, dabei in seiner absoluten Höhe aber versetzt ist zu dem erwarteten Höhenprofil H, so kann dies darauf hindeuten, dass zwei oder mehr Objekte 2, 20, 21 übereinander angeordnet sind, was z. B. auf einen Manipulationsversuch einem automatischen Checkout-System hindeuten kann. Dies kann entsprechend angezeigt werden, so dass der Checkout-Vorgang händisch durch Personal überprüft werden kann.

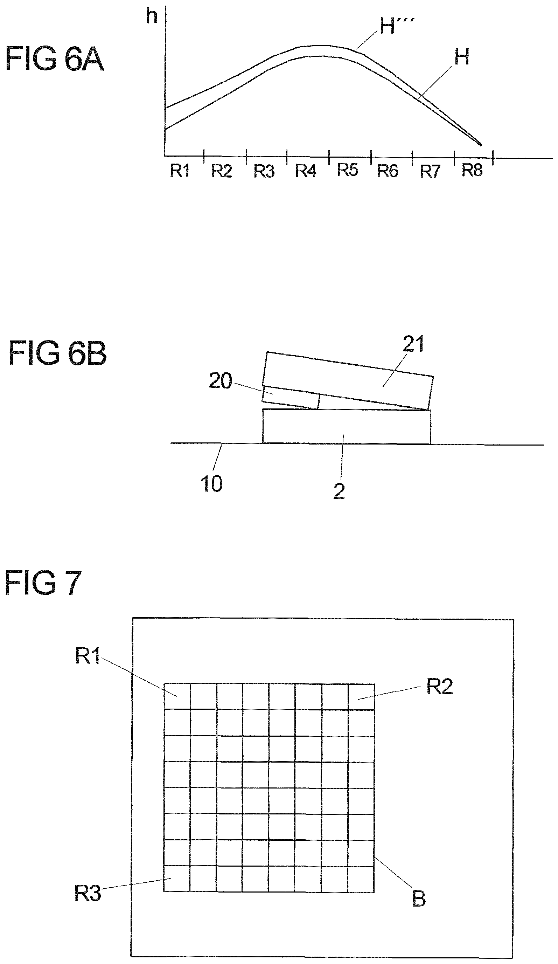

Bei einem in Fig. 6A und 6B dargestellten Fall ist ein Objekt 21 in geneigter Weise auf zwei anderen Objekten 2, 20 angeordnet, weil ein kleines Objekt 20 sich zwischen dem oberen Objekt 21 und dem unteren Objekt 2 befindet. Wiederum kann durch Bestimmung des Höhenprofils H'" und durch Vergleich mit einem erwarteten Höhenprofil H bestimmt werden, dass aufgrund der Abweichungen augenscheinlich das Auflegen der Objekte 2, 20, 21 nicht in zulässiger Weise erfolgt ist.

Zudem kann auch bestimmt werden, welche Neigung das Objekt 21 aufweist, indem, wie in Fig. 7 veranschaulicht, anhand unterschiedlicher Bildausschnitte, die unterschiedliche Regionen R1, R2, R3 abbilden, unterschiedliche Fokusstellungen und daraus Abstandswerte für die Regionen R1, R2, R3 bestimmt werden, aus denen die Lage des Objektes 21 im Raum bestimmt werden kann. Hieraus kann dann die Neigung des Objekts 21 relativ zu der Ablagefläche 10 abgeleitet werden, wobei anhand der ermittelten Neigung wiederum Unstimmigkeiten entdeckt und entsprechend angezeigt werden können.

Die Bildausschnitte, die den Regionen R1, R2, R3 gemäß Fig. 7 zugeordnet sind, sind vorzugsweise möglichst weit voneinander entfernt, um eine genaue Bestimmung der Neigung zu ermöglichen.

Der der Erfindung zugrundeliegende Gedanke ist nicht auf die vorangehend geschilderten Ausführungsbeispiele beschränkt, sondern lässt sich auch bei gänzlich anders gearteten Ausführungsformen verwirklichen.

So kann eine Vorrichtung der vorangehend beschriebenen Art grundsätzlich auch bei anderen Systemen zur Objekterfassung eingesetzt werden, bei denen mit einfachen Mitteln anhand einer Abstandsmessung ein Abstand, ein Profil oder eine Oberflächenform gemessen werden soll. Insofern ist die hier beschriebene Vorrichtung nicht auf automatische Checkout-Systeme in einer Ladengeschäftsumgebung beschränkt.

### Bezugszeichenliste

- 1: Vorrichtung
- 10: Ablagefläche
- 11: Kameravorrichtung
- 110: Objektiv
- 111: Autofokuseinheit
- 112: Linse
- 2, 20, 21: Objekt
- 3: Steuer- und Auswerteeinheit
- 4: Erkennungsmarke
- B: Bild
- d, d0: Abstand
- d1-d8, dm: Abstandswert
- E: Fokusebene
- F: Förderrichtung
- h: Höhe
- H, H', H", H'": Höhenprofil
- P: Steuerparameter
- P1-P8, Pm: Steuerparameterwert
- R1-R8: Region
- W: Funktion

## Patentansprüche

1. Vorrichtung (1) zum Präsentieren von Objekten (2, 20, 21), mit
- einer Ablagefläche (10) zum Ablegen mindestens eines Objekts (2, 20, 21),
- einer Kameravorrichtung (11) zum Aufnehmen mindestens eines Bildes (B) zum Abbilden mindestens eines auf der Ablagefläche (10) abgelegten Objekts (2, 20, 21),
- einem Kameraobjektiv (110) der Kameravorrichtung (10) und
- einer Autofokuseinheit (111) der Kameravorrichtung (10) zum Einstellen der Bildschärfe des mindestens einen Bildes (B), wobei die Autofokuseinheit (111) ausgebildet ist, eine Fokusstellung des Kameraobjektivs (110) in Abhängigkeit von einem Steuerparameter (P) einzustellen,
- einer Steuer- und Auswerteeinheit (3), die ausgebildet ist, anhand eines einer eingestellten Fokusstellung zugeordneten Steuerparameterwerts (P1-P8, Pm) einen Abstandswert (d1-d8, dm), der einen Abstand (d) zwischen einer Region (R1-R8) des mindestens einen Objekts (2, 20, 21) und dem Kameraobjektiv (10) angibt, zu bestimmen,
**dadurch gekennzeichnet,**
**dass** die Steuer- und Auswerteeinheit (3) ausgebildet ist, für eine Plausibilitätsprüfung einen bestimmten Abstandswert (d1-d8, dm) mit einem erwarteten Abstand (d0) zu vergleichen, um in Abhängigkeit von dem Vergleich zu prüfen, ob das mindestens eine Objekt (2, 20, 21) richtig auf die Ablagefläche (10) abgelegt worden ist oder nicht.

2. Vorrichtung (1) nach Anspruch 1, **dadurch gekennzeichnet, dass** die Ablagefläche (10) als Förderband zum Vorbeiführen des mindestens einen Objekts (2, 20, 21) entlang einer Förderrichtung (F) an der Kameravorrichtung (11), als Ablageplattform zum Ablegen des mindestens einen Objekts (2, 20, 21) im Sichtbereich der Kameravorrichtung (11) oder als Behältnis zum Hineinlegen des mindestens einen Objekts (2, 20, 21) im Sichtbereich der Kameravorrichtung (11) ausgebildet ist.

3. Vorrichtung (1) nach Anspruch 1 oder 2, **dadurch gekennzeichnet, dass** die Steuer- und Auswerteeinheit (3) ausgebildet ist, anhand mehrerer Steuerparameterwerte (P1-P8, Pm), die mehreren unterschiedlichen Fokusstellungen zugeordnet sind, mehrere Abstandswerte (d1-d8, dm), die Abstände (d) zwischen unterschiedlichen Regionen (R1-R8) des mindestens einen Objekts (2, 20, 21) und dem Kameraobjektiv (10) angeben, zu bestimmen.

4. Vorrichtung (1) nach Anspruch 3, **dadurch gekennzeichnet, dass** die Steuer- und Auswerteeinheit (3) ausgebildet ist, anhand der bestimmten Abstandswerte (d1-d8, dm) ein Höhenprofil (H, H', H", H"') des mindestens einen Objekts (2, 20, 21) zu bestimmen.

5. Vorrichtung (1) nach Anspruch 4, **dadurch gekennzeichnet, dass** die Steuer- und Auswerteeinheit (3) ausgebildet ist, anhand des bestimmten Höhenprofils (H, H', H", H"') des mindestens einen Objekts (2, 20, 21) eine Abweichung von einem erwarteten Höhenprofil (H) des mindestens einen Objekts (2, 20, 21) zu ermitteln.

6. Vorrichtung (1) nach einem der vorangehenden Ansprüche, **dadurch gekennzeichnet, dass** die Steuer- und Auswerteeinheit (3) ausgebildet ist, anhand mehrerer bestimmter Abstandswerte (d1-d8, dm) eine Neigung des mindestens einen Objekts (2, 20, 21) relativ zu der Ablagefläche (10) zu bestimmen.

7. Vorrichtung (1) nach Anspruch 6, **dadurch gekennzeichnet, dass** die Steuer- und Auswerteeinheit (3) ausgebildet ist, für die Bestimmung der Neigung mindestens drei Abstandswerte (d1-d8, dm) zu ermitteln, die die Abstände (d) zu mindestens drei unterschiedlichen Regionen (R1-R8) des mindestens einen Objekts (2, 20, 21) angeben.

8. Vorrichtung (1) nach einem der vorangehenden Ansprüche, **dadurch gekennzeichnet, dass** die Steuer- und Auswerteeinheit (3) ausgebildet ist, anhand mehrerer bestimmter Abstandswerte (d1-d8, dm) eine Form des mindestens einen Objekts (2, 20, 21) zu erkennen.

9. Vorrichtung (1) nach einem der vorangehenden Ansprüche, **dadurch gekennzeichnet, dass** die Steuer- und Auswerteeinheit (3) ausgebildet ist, anhand eines oder mehrerer bestimmter Abstandswerte (d1-d8, dm) einen Korrekturfaktor für eine Bildverarbeitung zu bestimmen, um anhand des Korrekturfaktors eine Skalierung des mindestens einen in dem aufgenommenen Bild (B) abgebildeten Objekts (2, 20, 21) zu verändern und/oder eine perspektivische Verzerrung des mindestens einen in dem aufgenommenen Bild (B) abgebildeten Objekts (2, 20, 21) auszugleichen.

10. Vorrichtung (1) nach einem der vorangehenden Ansprüche, **dadurch gekennzeichnet, dass** das Kameraobjektiv (110) eine Linse (112) umfasst und mittels der Autofokuseinheit (111) eine Fokusstellung der Linse (112) einstellbar ist.

11. Vorrichtung (1) nach Anspruch 10, **dadurch gekennzeichnet, dass** die Linse (112) durch eine Flüssigkeitslinse, eine motorbetriebene Linse oder eine piezoelektrisch angetriebene Linse ausgebildet ist.

12. Verfahren (1) zum Präsentieren von Objekten (2, 20, 21), bei dem
- mindestens ein Objekt (2, 20, 21) auf eine Ablagefläche (10) abgelegt wird,
- eine Kameravorrichtung (11) mindestens ein Bild (B) zum Abbilden des auf der Ablagefläche (10) abgelegten Objekts (2, 20, 21) aufnimmt,
- eine Autofokuseinheit (111) einer Kameravorrichtung (10) die Bildschärfe des mindestens einen Bildes (B) einstellt, indem die Autofokuseinheit (111) eine Fokusstellung des Kameraobjektivs (110) in Abhängigkeit von einem Steuerparameter (P) einstellt,
wobei eine Steuer- und Auswerteeinheit (3) anhand eines einer eingestellten Fokusstellung zugeordneten Steuerparameterwerts (P1-P8, Pm) einen Abstandswert (d1-d8, dm), der einen Abstand (d) zwischen einer Region (R1-R8) des mindestens einen Objekts (2, 20, 21) und dem Kameraobjektiv (10) angibt, bestimmt,
**dadurch gekennzeichnet,**
**dass** die Steuer- und Auswerteeinheit (3) für eine Plausibilitätsprüfung einen bestimmten Abstandswert (d1-d8, dm) mit einem erwarteten Abstand (d0) vergleicht, um in Abhängigkeit von dem Vergleich zu prüfen, ob das mindestens eine Objekt (2, 20, 21) richtig auf die Ablagefläche (10) abgelegt worden ist oder nicht.

## Claims

1. A device (1) for presenting objects (2, 20, 21), comprising
- a depositing surface (10) for depositing at least one object (2, 20, 21),
- a camera device (11) for taking at least one image (B) for depicting at least one object (2, 20, 21) deposited on the depositing surface (10),
- a camera lens (110) of the camera device (10), and
- an autofocus unit (111) of the camera device (10) for adjusting the image sharpness of the at least one image (B), wherein the autofocus unit (111) is formed to set a focus position of the camera lens (110) in dependence on a control parameter (P),
- a control and evaluation unit (3) which is formed to determine a distance value (d1-d8, dm), which indicates a distance (d) between a region (R1-R8) of the at least one object (2, 20, 21) and the camera lens (10), with reference to a control parameter value (P1-P8, Pm) associated to a set focus position,
**characterized in**
**that** the control and evaluation unit (3) is formed to compare a determined distance value (d1-d8, dm) with an expected distance (d0) for a plausibility check, in order to check in dependence on the comparison whether or not the at least one object (2, 20, 21) has correctly been deposited on the depositing surface (10).

2. The device (1) according to claim 1, **characterized in that** the depositing surface (10) is formed as conveyor belt for guiding the at least one object (2, 20, 21) along a conveying direction (F) past the camera device (11), as depositing platform for depositing the at least one object (2, 20, 21) in the field of vision of the camera device (11) or as receptacle for putting in the at least one object (2, 20, 21) in the field of vision of the camera device (11).

3. The device (1) according to claim 1 or 2, **characterized in that** the control and evaluation unit (3) is formed to determine a plurality of distance values (d1-d8, dm), the distances (d) between different regions (R1-R8) of the at least one object (2, 20, 21) and the camera lens (10) with reference to a plurality of control parameter values (P1-P8, Pm) which are associated to a plurality of different focus positions.

4. The device (1) according to claim 3, **characterized in that** the control and evaluation unit (3) is formed to determine a height profile (H, H', H", H'") of the at least one object (2, 20, 21) with reference to the determined distance values (d1-d8, dm).

5. The device (1) according to claim 4, **characterized in that** the control and evaluation unit (3) is formed to determine a deviation from an expected height profile (H) of the at least one object (2, 20, 21) with reference to the determined height profile (H, H', H", H"') of the at least one object (2, 20, 21).

6. The device (1) according to any of the preceding claims, **characterized in that** the control and evaluation unit (3) is formed to determine an inclination of the at least one object (2, 20, 21) relative to the depositing surface (10) with reference to a plurality of determined distance values (d1-d8, dm).

7. The device (1) according to claim 6, **characterized in that** the control and evaluation unit (3) is formed to determine at least three distance values (d1-d8, dm), which indicate the distances (d) to a least three different regions (R1-R8) of the at least one object (2, 20, 21), for the determination of the inclination.

8. The device (1) according to any of the preceding claims, **characterized in that** the control and evaluation unit (3) is formed to recognize a shape of the at least one object (2, 20, 21) with reference to a plurality of determined distance values (d1-d8, dm).

9. The device (1) according to any of the preceding claims, **characterized in that** the control and evaluation unit (3) is formed to determine a correction factor for an image processing with reference to one or more determined distance values (d1-d8, dm), in order to change a scaling of the at least one object (2, 20, 21) depicted in the captured image (B) with reference to the correction factor and/or to compensate a perspective distortion of the at least one object (2, 20, 21) depicted in the captured image (B).

10. The device (1) according to any of the preceding claims, **characterized in that** the camera lens (110) comprises a lens (112) and a focus position of the lens (112) is adjustable by means of the autofocus unit (111).

11. The device (1) according to claim 10, **characterized in that** the lens (112) is formed by a liquid lens, a motor-driven lens or a piezoelectrically driven lens.

12. A method for presenting objects (2, 20, 21) in which
- at least one object (2, 20, 21) is deposited on a depositing surface (10),
- a camera device (11) takes at least one image (B) for depicting the object (2, 20, 21) deposited on the depositing surface (10),
- an autofocus unit (111) of a camera device (10) adjusts the image sharpness of the at least one image (B), in that the autofocus unit (111) sets a focus position of the camera lens (110) in dependence on a control parameter (P),
wherein a control and evaluation unit (3) determines a distance value (d1-d8, dm), which indicates a distance (d) between a region (R1-R8) of the at least one object (2, 20, 21) and the camera lens (10), with reference to a control parameter value (P1-P8, Pm) associated to a set focus position,
**characterized in**
**that** for a plausibility check the control and evaluation unit (3) compares a determined distance value (d1-d8, dm) with an expected distance (d0), in order to check whether or not the at least one object (2, 20, 21) has correctly been deposited on the depositing surface (10) in dependence on the comparison.

## Revendications

1. Dispositif (1) de présentation d'objets (2, 20, 21), avec
- une surface de dépose (10) pour le dépôt d'au moins un objet (2, 20, 21),
- un dispositif de caméra (11) pour la prise d'au moins une image (B) pour reproduire au moins un objet (2, 20, 21) déposé sur la surface de dépose (10),
- un objectif de caméra (110) du dispositif de caméra (10) et
- une unité de mise au point automatique (111) du dispositif de caméra (10) pour régler la netteté d'image de l'au moins une image (B), dans lequel l'unité de mise au point automatique (111) est conçue pour régler une position de mise au point de l'objectif de caméra (110) en fonction d'un paramètre de commande (P),
- une unité de commande et d'évaluation (3) qui est conçue pour déterminer, à l'aide d'une valeur de paramètre de commande (P1-P8, Pm) associée à une position de mise au point réglée, une valeur de distance (d1-d8, dm) qui indique une distance (d) entre une région (R1-R8) de l'au moins un objet (2, 20, 21) et de l'objectif de caméra (10),
**caractérisé en ce que**
l'unité de commande et d'évaluation (3) est conçue pour comparer, pour une vérification de plausibilité, une valeur de distance (d1-d8, dm) déterminée à une distance attendue (d0) afin de vérifier en fonction de la comparaison si l'au moins un objet (2, 20, 21) a été déposé correctement ou non sur la surface de dépose (10).

2. Dispositif (1) selon la revendication 1, **caractérisé en ce que** la surface de dépose (10) est conçue en tant que bande transporteuse pour faire passer l'au moins un objet (2, 20, 21) le long d'une direction de transport (F) devant le dispositif de caméra (11), en tant que plateforme de dépose pour déposer l'au moins un objet (2, 20, 21) dans le champ visuel du dispositif de caméra (11) ou en tant que récipient pour y placer l'au moins un objet (2, 20, 21) dans le champ visuel du dispositif de caméra (11).

3. Dispositif (1) selon la revendication 1 ou 2, **caractérisé en ce que** l'unité de commande et d'évaluation (3) est conçue pour déterminer, à l'aide de plusieurs valeurs de paramètres de commande (P1-P8, Pm) qui sont associées à plusieurs positions de mise au point différentes, plusieurs valeurs de distance (d1-d8, dm) qui indiquent des distances (d) entre différentes régions (R1-R8) de l'au moins un objet (2, 20, 21) et l'objectif de caméra (10).

4. Dispositif (1) selon la revendication 3, **caractérisé en ce que** l'unité de commande et d'évaluation (3) est conçue pour déterminer, à l'aide des valeurs de distance (d1-d8, dm) déterminées, un profil de hauteur (H, H', H", H"') de l'au moins un objet (2, 20,21).

5. Dispositif (1) selon la revendication 4, **caractérisé en ce que** l'unité de commande et d'évaluation (3) est conçue pour calculer, à l'aide du profil de hauteur (H, H', H", H"') déterminé de l'au moins un objet (2, 20, 21), un écart par rapport à un profil de hauteur (H) attendu de l'au moins un objet (2, 20, 21).

6. Dispositif (1) selon l'une quelconque des revendications précédentes, **caractérisé en ce que** l'unité de commande et d'évaluation (3) est conçue pour déterminer, à l'aide de plusieurs valeurs de distance (d1-d8, dm) déterminées, une inclinaison de l'au moins un objet (2, 20, 21) relativement à la surface de dépose (10).

7. Dispositif (1) selon la revendication 6, **caractérisé en ce que** l'unité de commande et d'évaluation (3) est conçue pour calculer, pour la détermination de l'inclinaison, au moins trois valeurs de distance (d1-d8, dm) qui indiquent les distances (d) à au moins trois régions (R1-R8) différentes de l'au moins un objet (2, 20, 21).

8. Dispositif (1) selon l'une quelconque des revendications précédentes, **caractérisé en ce que** l'unité de commande et d'évaluation (3) est conçue pour reconnaître, à l'aide de plusieurs valeurs de distance (d1-d8, dm) déterminées, une forme de l'au moins un objet (2, 20, 21).

9. Dispositif (1) selon l'une quelconque des revendications précédentes, **caractérisé en ce que** l'unité de commande et d'évaluation (3) est conçue pour déterminer, à l'aide d'une ou de plusieurs valeurs de distance (d1-d8, dm) déterminées, un facteur de correction pour un traitement d'image afin de modifier, à l'aide du facteur de correction, une mise à l'échelle de l'au moins un objet (2, 20, 21) reproduit dans l'image (B) prise et/ou pour compenser une distorsion d'image due à la perspective de l'au moins un objet (2, 20, 21) reproduit dans l'image (B) prise.

10. Dispositif (1) selon l'une quelconque des revendications précédentes, **caractérisé en ce que** l'objectif de caméra (110) comprend une lentille (112) et une position de mise au point de la lentille (112) peut être réglée au moyen de l'unité de mise au point automatique (111).

11. Dispositif (1) selon la revendication 10, **caractérisé en ce que** la lentille (112) est conçue par une lentille immergée dans un liquide, une lentille entraînée par un moteur ou une lentille à entraînement piézoélectrique.

12. Procédé (1) de présentation d'objets (2, 20, 21), où
- au moins un objet (2, 20, 21) est déposé sur une surface de dépose (10),
- un dispositif de caméra (11) prend au moins une image (B) pour reproduire l'objet (2, 20, 21) déposé sur la surface de dépose (10),
- une unité de mise au point automatique (111) d'un dispositif de caméra (10) règle la netteté d'image de l'au moins une image (B) par le fait que l'unité de mise au point automatique (111) règle une position de mise au point de l'objectif de caméra (110) en fonction d'un paramètre de commande (P),
dans lequel une unité de commande et d'évaluation (3) détermine, à l'aide d'une valeur de paramètre de commande (P1-P8, Pm) associée à une position de mise au point réglée, une valeur de distance (d1-d8, dm) qui indique une distance (d) entre la région (R1-R8) de l'au moins un objet (2, 20, 21) et l'objectif de caméra (10),
**caractérisé en ce que**
l'unité de commande et d'évaluation (3) compare, pour une vérification de plausibilité, une valeur de distance (d1-d8, dm) déterminée à une distance attendue (d0) afin de vérifier en fonction de la comparaison si l'au moins un objet (2, 20, 21) a été déposé correctement ou non sur la surface de dépose (10).
